# EUROPEAN PATENT APPLICATION

(11) **EP 2 905 511 A1**
(43) Date of publication of application: **12.08.2015**
(21) Application number: 14179031.1
(22) Date of filing: 30.07.2014
(51) Int. Cl.: F16H 55/28, B62D 3/12

(54) **Rack guide mechanism**

(30) Priority: 07.02.2014 JP 2014022426
(71) Applicant: Showa Corporation, Gyoda City Saitama 361-8506 (JP)
(72) Inventor: Iizuka, Hiroyuki, Tochigi 321-3315 (JP)
(74) Representative: Schulz, Oliver Frank Michael

(57) **Abstract**

A rack guide mechanism (1) includes: a rack guide (10) that presses a rack shaft (105) against a pinion shaft (104); a housing (20) that movably accommodates the rack guide; an elastic member (40) that biases the rack guide toward the rack shaft; and a gas chamber formation member (50) that is disposed in parallel with the elastic member in a moving direction of the rack guide, and that has a gas chamber (51) therein, and can be contracted in the moving direction, in which when the rack guide moves against the elastic member, the rack guide compresses the gas chamber formation member while compressing gas in the gas chamber.

## Description

### BACKGROUND

### 1. Technical Field

The present invention relates to a rack guide mechanism.

### 2. Related Art

A rack and pinion steering apparatus mounted on a vehicle includes a pinion shaft and a rack shaft, and pinion teeth of the pinion shaft mesh with rack teeth of the rack shaft. The pinion shaft is caused to rotate by operation of a steering wheel. The rack shaft linearly moves in a lateral direction of the vehicle, and steers each tire wheel connected to the rack shaft via a tie rod.

Here, there is a problem in that when the pinion shaft rotates, a separating reactive force occurs between the pinion teeth and the rack teeth, thereby causing separation of the pinion teeth and the rack teeth from each other, and causing an occurrence of backlash. Even when a force, a so-called reverse force input from the tire wheel is exerted on the rack shaft due to a bumpy road, a separating reactive force occurs between the pinion teeth and the rack teeth, thereby causing the separation of the pinion teeth and the rack teeth from each other, and causing the occurrence of backlash.

The following technology (refer to JP-A-2012-245811) is disclosed. A rack guide is provided so as to be positioned opposite to the pinion teeth and to interpose the rack shaft between the rack guide and the pinion teeth. A compression coil spring biases the rack shaft toward the pinion shaft via the rack guide. Accordingly, a pre-load is exerted on a meshing portion between the pinion teeth and the rack teeth, and the occurrence of backlash is prevented.

However, in practicality, for example, when a vehicle travels on a bad road, an excessive load is input to the rack shaft from the tire wheel. Accordingly, the rack teeth and the pinion teeth may separate from each other, and the rack teeth and pinion teeth may collide with each other to cause an occurrence of abnormal noise (rack rattle noise) when returning to their original positions.

In a method of preventing the separation of the pinion teeth and the rack teeth from each other, it is proposed that a load being input to the rack guide from the compression coil spring be set to be large, thereby causing an initial pre-load to increase. However, there is a problem in that steering feeling deteriorates. That is, there is a problem in that a frictional force between the pinion teeth and the rack teeth increases due to the increased pre-load, and a return of the steering wheel is delayed when the vehicle travels at a low speed.

### SUMMARY OF INVENTION

An object of the present invention is to provide a rack guide mechanism in which an initial pre-load decreases, and pinion teeth and rack teeth are unlikely to separate from each other.

A rack guide mechanism according to an aspect of the present invention, includes a rack guide that presses a rack shaft against a pinion shaft; a housing that movably accommodates the rack guide; an elastic member that biases the rack guide toward the rack shaft; and a gas chamber formation member that is disposed in parallel with the elastic member in a moving direction of the rack guide, and that has a gas chamber therein, and can be contracted in the moving direction. When the rack guide moves against the elastic member, the rack guide compresses the gas chamber formation member while compressing gas in the gas chamber.

In this configuration, when the rack guide moves against the elastic member, the rack guide compresses the gas chamber formation member while compressing the gas in the gas chamber. At the same time, the rack guide compresses the elastic member in the moving direction while causing the elastic member to undergo an elastic deformation.

Here, as displacement of the rack guide increases in the moving direction, a gas spring rate (a gas spring coefficient) of the gas chamber formation member increases as a quadratic function. In other words, as the displacement of the rack guide increases, a bias force of the gas chamber formation member to bias the rack guide toward the pinion shaft increases as a quadratic function. That is, in the initial state where the displacement of the rack guide is 0, a bias force of the gas chamber formation member to bias the rack guide toward the pinion shaft decreases to the minimum.

In the initial state where the displacement of the rack guide is 0, an initial pre-load being input to the rack shaft from the rack guide decreases. Accordingly, steering feeling does not deteriorate when a vehicle travels at a low speed.

In contrast, when the rack guide moves so as to be displaced, the gas in the gas chamber is compressed, and a bias force to bias the rack guide toward the pinion shaft increases as a quadratic function. Accordingly, the pinion teeth and the rack teeth are unlikely to separate from each other.

In the rack guide mechanism, a communication hole may be formed in the gas chamber formation member so as to communicate the gas chamber with the outside. In the initial state, the gas chamber formation member may be shorter than the elastic member in the moving direction, and may be in an uncompressed state. When the rack guide moves against the elastic member, the communication hole may be closed.

In the rack guide mechanism, the gas chamber formation member may be a bellows.

In the rack guide mechanism, the elastic member may be a compression coil spring. The gas chamber formation member may be coaxially disposed inside the compression coil spring.

According to the aspect of the present invention, it is possible to provide the rack guide mechanism in which an initial pre-load decreases, and pinion teeth and rack teeth are unlikely to separate from each other.

### BRIEF DESCRIPTION OF DRAWINGS

Fig. 1 is a configuration view of a steering apparatus according to an embodiment.
Fig. 2 is a cross-sectional view of a rack guide body according to the embodiment, and illustrates an initial state where a load is not input to a rack guide from a rack shaft.
Fig. 3 is a cross-sectional view of the rack guide body according to the embodiment, and illustrates a state where a load is input to the rack guide from the rack shaft, and the rack guide slides and is in contact with a bellows.
Fig. 4 is a cross-sectional view of the rack guide body according to the embodiment, and illustrates a state where a load is input to the rack guide from the rack shaft, and the rack guide slides and compresses the bellows.
Fig. 5 is a cross-sectional view of the rack guide body according to the embodiment, and illustrates a state where a load is input to the rack guide from the rack shaft, and the rack guide slides and compresses the bellows.
Fig. 6 is a graph illustrating a relationship among a position of the rack guide, a spring coefficient (rate) of a compression coil spring, and an air spring rate.

### DESCRIPTION OF EMBODIMENTS

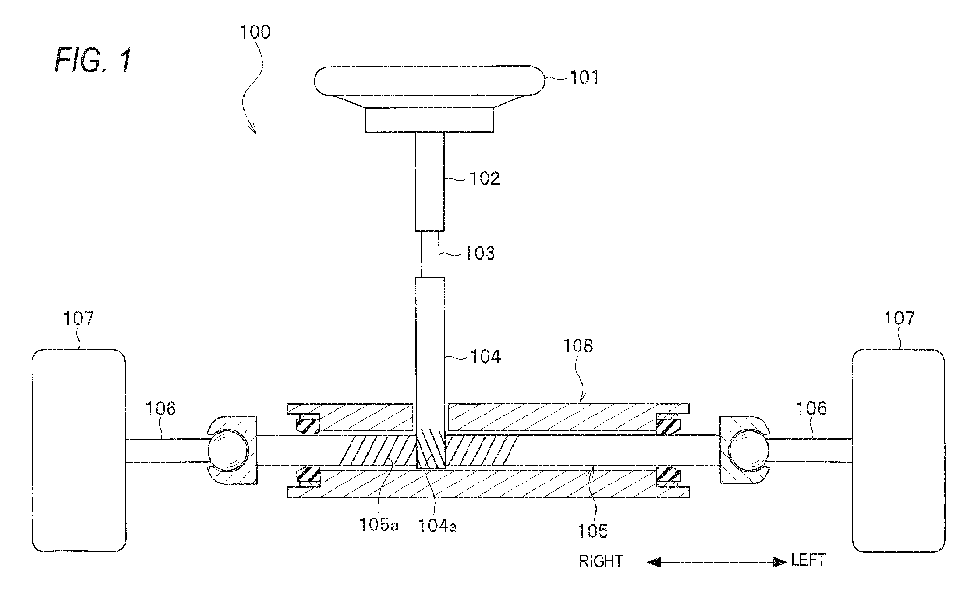

An embodiment of the present invention will be described with reference to Figs. 1 to 6.

### Configuration of Steering Apparatus

A steering apparatus 100 is a rack and pinion motor-driven power steering apparatus, and is a pinion assist type in which an assist force generated by an electric motor is input to a pinion shaft 104. The steering apparatus 100 may be a column assist type or a rack assist type. The steering apparatus 100 may be a hydraulic power steering apparatus in which an assist force is generated by a hydraulic motor.

The steering apparatus 100 includes a steering wheel 101 that is operated by a driver; a steering shaft (a steering column) 102 that integrally rotates with the steering wheel 101; a torsion bar 103 connected to a lower end of the steering shaft 102; a pinion shaft 104 connected to a lower end of the torsion bar 103; and a rack shaft 105 that extends in a lateral direction (a right and left direction) of a vehicle.

Pinion teeth 104a of the pinion shaft 104 meshes with rack teeth 105a of the rack shaft 105. When the pinion shaft 104 rotates, the rack shaft 105 moves in the lateral direction of the vehicle, and turns turning wheels (tire wheels) 107 connected to the rack shaft 105 via respective tie rods 106. The rack shaft 105 is accommodated in a cylindrical housing 108 via a bush and the like.

A worm wheel (not illustrated) is coaxially fixed to the pinion shaft 104. An assist force is input to the worm wheel (the pinion shaft 104) from the electric motor (not illustrated) based on a torsional torque occurring in the torsion bar 103.

### Configuration of Rack Guide Mechanism

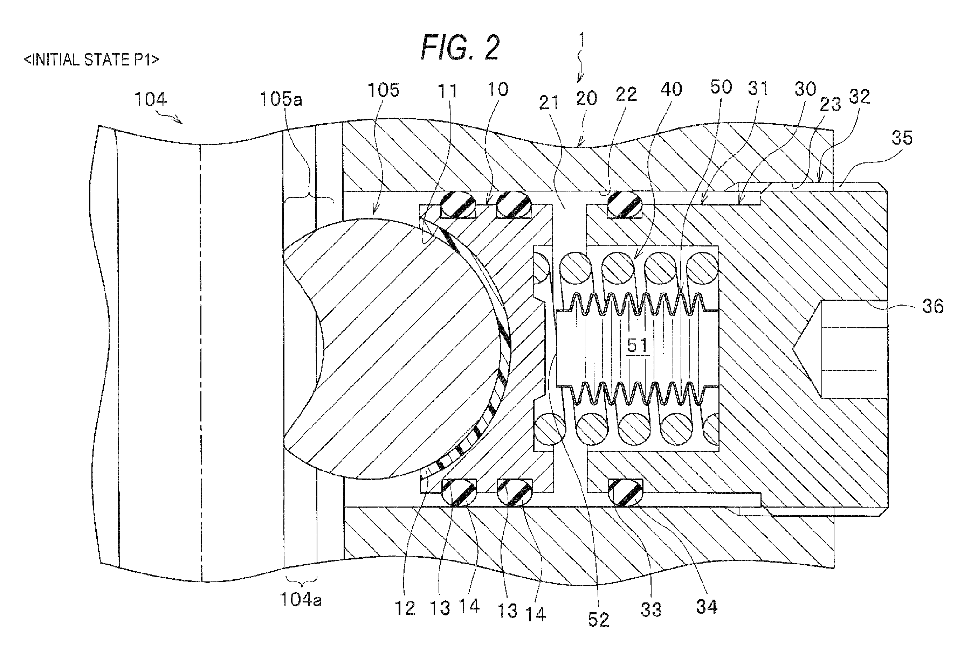

As illustrated in Fig. 2, the steering apparatus 100 includes a rack guide mechanism 1 that guides the rack shaft 105 in the lateral direction of the vehicle, and presses the rack shaft 105 against the pinion shaft 104. The rack guide mechanism 1 includes a rack guide 10; a housing 20; a cap 30; a compression coil spring (an elastic member) 40; and a bellows (a gas chamber formation member) 50.

For a clear description, in a sliding direction (a moving direction) of the rack guide 10, an orientation in which the pinion shaft 104 is positioned is defined as a front side, and an orientation opposite to the pinion shaft 104 is defined as a rear side. The rack teeth 105a are formed on a front side of the rack shaft 105, and the rack shaft 105 has a circular outer circumferential surface on a rear side thereof.

### Rack Guide

The rack guide 10 is a metallic component that is in slide contact with the rear side of the rack shaft 105 so as to guide the rack shaft 105 in the lateral direction of the vehicle, and that presses the rack shaft 105 against the pinion shaft 104. The rack guide 10 has a columnar external shape. The rack guide 10 includes a half-spherical slide contact surface 11 formed on the front side thereof, and the slide contact surface 11 is in slide contact with a rear surface of the rack shaft 105 that extends in the right and left direction. A resin layer 12 is formed on the slide contact surface 11 so as to reduce a frictional force with the rack shaft 105.

Two grooves 13 are formed in an outer circumferential surface of the rack guide 10 so as to extend in a circumferential direction. An O-ring 14 is mounted in each groove 13, and seals a gap between the rack guide 10 and the housing 20.

### Housing

The housing 20 has a cylindrical shape, and includes an accommodation chamber 21 that accommodates the rack shaft 105, the rack guide 10, the cap 30, the compression coil spring 40 and the bellows 50 therein. That is, the rack guide 10 is accommodated in the housing 20 so as to be slidable in a longitudinal direction (the sliding direction). A front side of the accommodation chamber 21 is open toward the pinion shaft 104, and a rear side of the accommodation chamber 21 is open toward the outside.

A female screw 23 is formed on a rear side of an inner circumferential surface 22 of the housing 20. The cap 30 is screwed onto the female screw 23.

### Cap

The cap 30 closes a rear opening of the accommodation chamber 21, and the compression coil spring 40 and the bellows 50 are prevented from falling out of the housing 20 by retention of the cap 30. The cap 30 includes a bottomed cylindrical cap main body 31, a rear side of which is closed, and a screw portion 32 formed on the rear side of the cap main body 31. The cap main body 31 and the screw portion 32 may be individual members.

A groove 33 is formed in an outer circumferential surface of the cap main body 31 so as to extend in a circumferential direction. An O-ring 34 is mounted in the groove 33, and the O-ring 34 seals a gap between the cap main body 31 and the housing 20.

A male screw 35 is formed on an outer circumferential surface of the screw portion 32, and the male screw 35 is screwed onto the female screw 23. A hexagonal socket 36 is formed in a rear end surface of the screw portion 32, and a hexagonal wrench is inserted into the hexagonal socket. When the screw portion 32 rotates, an axial position (a longitudinal position) of the cap 30 is adjusted relative to the housing 20, and an initial spring length and an initial bias force of the compression coil spring 40 are adjusted.

### Compression Coil Spring

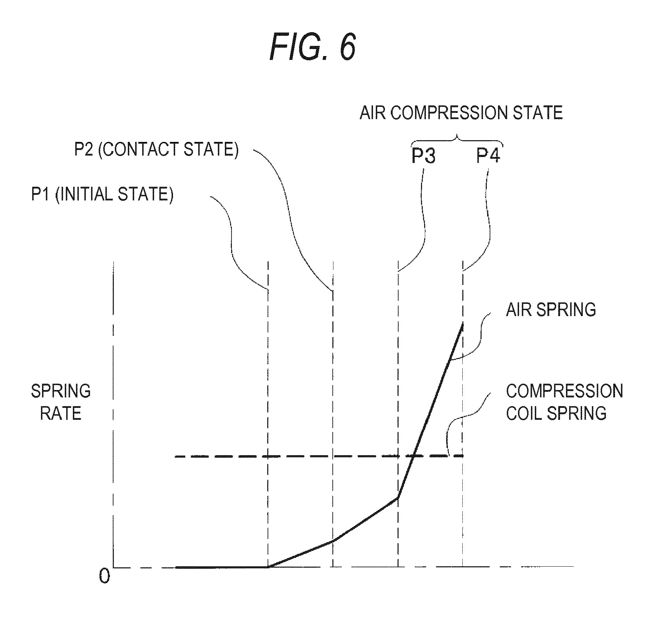

The compression coil spring 40 is an elastic member that is installed between the rack guide 10 and the cap 30, and biases the rack guide 10 toward the rack shaft 105 and the pinion shaft 104. Even in an initial state, the compression coil spring 40 is provided in a compressed manner between the rack guide 10 and the cap 30 so as to bias the rack guide 10 toward the pinion shaft 104 (refer to Fig. 2). Even when the spring length changes, the compression coil spring 40 has a constant spring rate (spring coefficient) (refer to Fig. 6).

### Bellows

The bellows 50 is made of resin or rubber, and is a bellows that is disposed in parallel with the compression coil spring 40 in the sliding direction of the rack guide 10, and can be contracted in the sliding direction (refer to Figs. 2 to 5). The bellows 50 is coaxially disposed inside the compression coil spring 40. When the bellows 50 is retracted, the bellows 50 is satisfactorily folded inside the compression coil spring 40, and the outer diameter of the bellows 50 is set so as not to interfere with the compression coil spring 40. In this configuration, the bellows 50 is coaxially disposed inside the compression coil spring 40, and thus it is possible to reduce the size of the rack guide mechanism 1.

The bellows 50 has a gas chamber 51 therein, and in the initial state, the gas chamber 51 communicates with the outside via a communication hole 52 on a front side of the gas chamber 51. That is, in the initial state, the bellows 50 is shorter than the compression coil spring 40 in the longitudinal direction (the sliding direction), and the bellows 50 is in an uncompressed state.

In this configuration, in the initial state, the bellows 50 is shorter than the compression coil spring 40 in the moving direction, and is in an uncompressed state, and thus a bias force is exerted on the rack guide 10 by the bellows 50. That is, it is possible to easily assemble the rack guide mechanism 1 without retracting the bellows 50.

When the rack guide 10 moves against the compression coil spring 40, the communication hole 52 is closed. Accordingly, gas in the gas chamber 51 is compressed, and a bias force to bias the rack guide 10 toward the pinion shaft 104 increases as a quadratic function.

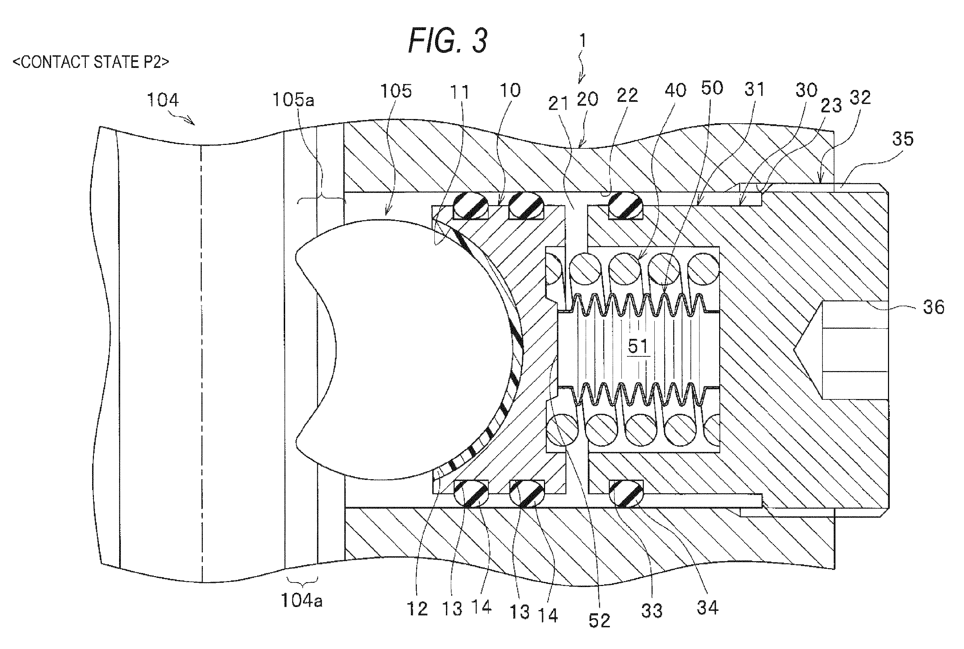

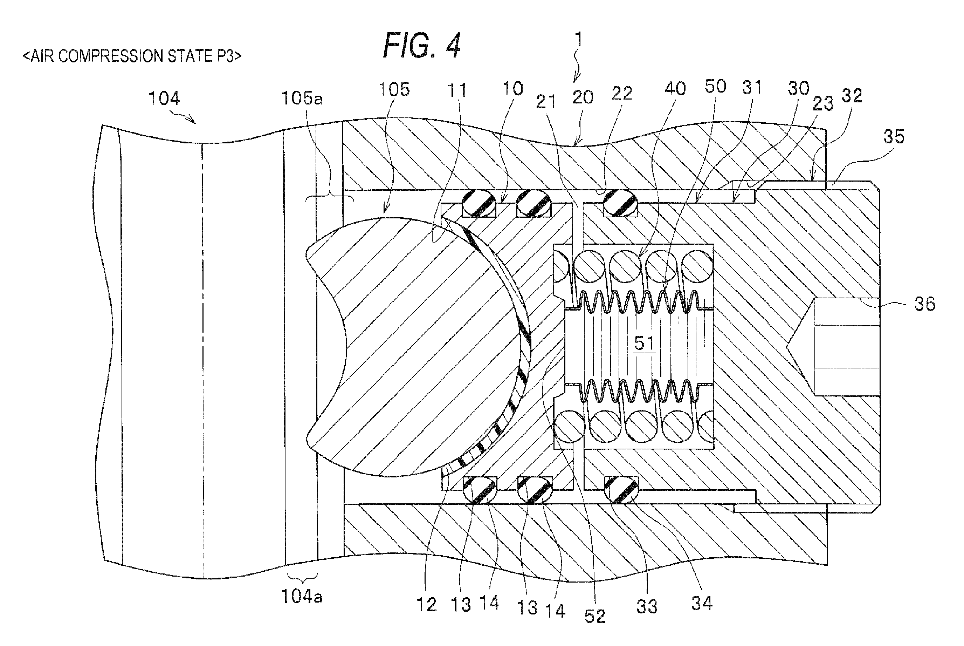

When the rack guide 10 slides backwards against the compression coil spring 40, the rack guide 10 is brought into contact with the communication hole 52. Accordingly, the communication hole 52 is closed (refer to Fig. 3), and the rack guide 10 compresses the bellows 50 while compressing air in the gas chamber 51 (refer to Figs. 4 to 5).

### Operation Effects of Rack Guide Mechanism

Operation effects of the rack guide mechanism 1 will be described.

As illustrated in Fig. 2, in the initial state, the bellows 50 is not in contact with the rack guide 10, and only the compression coil spring 40 biases the rack guide 10 and the rack shaft 105 toward the pinion shaft 104. That is, an initial pre-load (a set load) input to the rack guide 10 is small, and a frictional force between the rack shaft 105 and the pinion shaft 104 is small. Accordingly, a return of the steering wheel is satisfactory when the vehicle travels at a low speed, and a preferable steering feeling is obtained.

When the rack shaft 105 and the pinion shaft 104 separate from each other, the rack guide 10 slides backwards against a spring force (a bias force) of the compression coil spring 40. The rear surface of the rack guide 10 is brought into contact with the bellows 50, the communication hole 52 is closed, and the gas chamber 51 is sealed (refer to Fig. 3).

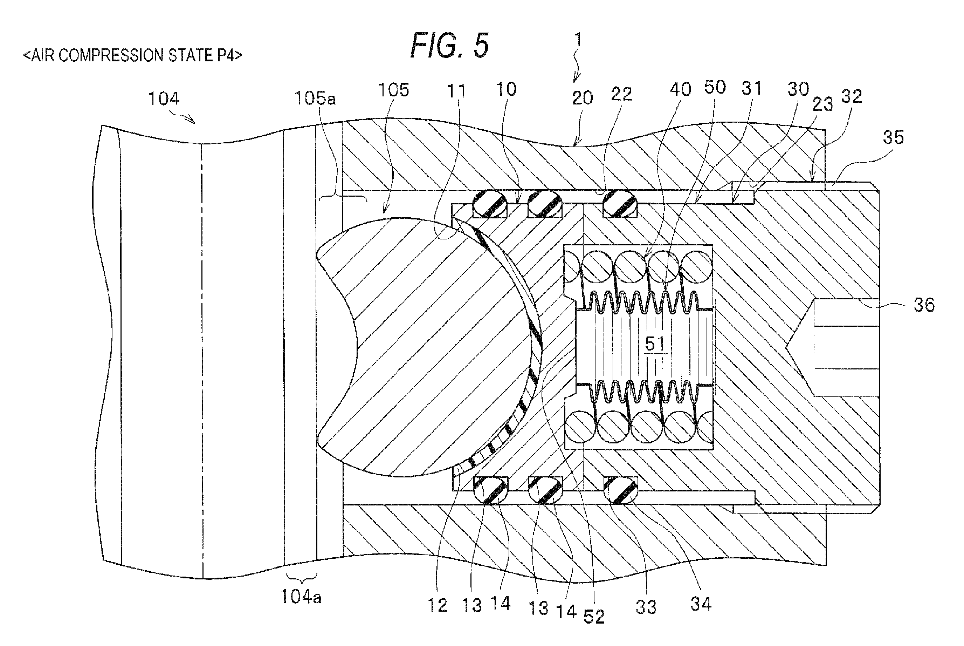

When the rack guide 10 further moves backwards, the rack guide 10 compresses the compression coil spring 40 and the bellows 50 while compressing air sealed in the gas chamber 51 (refer to Figs. 4 and 5). In this case, the bellows 50 having the air sealed in the gas chamber 51 functions as an air spring (a gas spring), and as illustrated in Fig. 6, an air spring rate increases as a quadratic function.

The air spring rate increases as a quadratic function as described above (refer to Fig. 6). Accordingly, in practicality, after the rack guide 10 is in contact with the bellows 50, the rack guide 10 is unlikely to slide backwards. That is, after the rack guide 10 is in contact with the bellows 50, the pinion teeth 104a and the rack teeth 105a are unlikely to separate from each other. As a result, backlash is unlikely to occur, and rack rattle noise is unlikely to occur.

### Modification Example 1

The embodiment of the present invention is described above, but the present invention is not limited to the embodiment. For example, the following modifications may be made to the present invention.

The aforementioned embodiment illustrates the configuration in which the compression coil spring 40 obtained by winding a wire material in a helical shape is adopted as the elastic member. However, in other examples, a rubber-made cylindrical body may be adopted as the elastic member. A disc spring may be adopted as the elastic member.

### Modification Example 2

The aforementioned embodiment illustrates the configuration in which the bellows 50 is adopted as the gas chamber formation member. However, the gas chamber formation member may be formed of a plurality of cylindrical bodies with different diameters which are coaxially disposed and can be extended and contracted. The gas chamber formation member may be a rubber-made columnar body or a rubber-made cylindrical body in which the communication hole and the gas chamber are formed.

### Modification Example 3

The aforementioned embodiment illustrates the configuration in which the bellows 50 is coaxially disposed inside the compression coil spring 40. However, in another example, the bellows 50 may be coaxially disposed outside the compression coil spring 40. For example, three bellows 50 may be disposed in a radial direction outside the compression coil spring 40 so as to be positioned at even intervals in a circumferential direction.

### Modification Example 4

The aforementioned embodiment illustrates the configuration in which the bellows 50 is separated from the rack guide 10 in the initial state. However, in another example, the bellows 50 in an uncompressed state may be in contact with the rack guide 10.

## Claims

1. A rack guide mechanism comprising:
a rack guide that presses a rack shaft against a pinion shaft;
a housing that movably accommodates the rack guide;
an elastic member that biases the rack guide toward the rack shaft; and
a gas chamber formation member that is disposed in parallel with the elastic member in a moving direction of the rack guide, and that has a gas chamber therein, and can be contracted in the moving direction,
wherein when the rack guide moves against the elastic member, the rack guide compresses the gas chamber formation member while compressing gas in the gas chamber.

2. The rack guide mechanism according to claim 1,
wherein a communication hole is formed in the gas chamber formation member so as to communicate the gas chamber with an outside,
in an initial state, the gas chamber formation member is shorter than the elastic member in the moving direction and is in an uncompressed state, and
when the rack guide moves against the elastic member, the communication hole is closed.

3. The rack guide mechanism according to claim 1 or 2,
wherein the gas chamber formation member is a bellows.

4. The rack guide mechanism according to any one of claims 1 to 3,
wherein the elastic member is a compression coil spring, and
the gas chamber formation member is coaxially disposed inside the compression coil spring.
